# EUROPÄISCHE PATENTSCHRIFT

(11) **EP 0 512 226 B1**
(45) Veröffentlichungstag und Bekanntmachung des Hinweises auf die Patenterteilung: **04.05.1994**
(21) Anmeldenummer: 92104747.8
(22) Anmeldetag: 19.03.1992
(51) Int. Cl.: B60T 15/38

(54) **Druckluftbremsanlage**
Air brake system
Système de freinage à air comprimé

(30) Priorität: 10.05.1991 DE 4115356
(43) Veröffentlichungstag der Anmeldung: 11.11.1992
(73) Patentinhaber: MAN Nutzfahrzeuge Aktiengesellschaft, 80976 München (DE)
(72) Erfinder: Kirchmeier, Klaus, W-8045 Ismaning (DE)

(56) Entgegenhaltungen:
- DE-A- 2 304 720
- DE-A- 3 133 963

## Beschreibung

Die Erfindung betrifft ein Verfahren zum Bremsen der Räder einer Achse bzw. eines Achsaggregates eines Fahrzeuges, insbesondere der Vorderachse eines Nutzfahrzeuges, sowie eine Druckluftbremsanlage zur Durchführung dieses Verfahrens.

Bekannte Druckluftbremsanlagen (z.B. DE-A- 3 133 963) haben einen Druckluftbehälter, dessen Befüllung über einen Kompressor druckgeregelt auf einen Druckluftvorrat mit einem zur Abbremsung des Fahrzeuges ausreichend Druck erfolgt. Bei Nutzfahrzeugen ist die Druckluftbremsanlage in der Regel auf einen Bremsdruck von ca.8 bar ausgelegt.

Stellt sich jedoch die Notwendigkeit, solche Druckluftbremsanlagen auf einen höheren Bremsdruck umzustellen, wäre die gesamte Anlage neu zu konzipieren und neu zu bauen. Beispielsweise müßten neue Ventile mit neuen Kennlinien entwickelt und entsprechend erprobt werden. Die Druckluftbevorratung müßte neu entwickelt werden, um die gesetzlich vorgeschriebenen Füllzeiten mit einem 1-Zylinder-Kompressor erreichen zu können. Die Druckleitungen müßten auf den höheren Druck ausgelegt, erprobt und anders verlegt werden. Außerdem müßte die Bremsen-Homologation (statische Messungen)neu erstellt werden.

Der Erfindung stellt sich daher die Aufgabe, ein Verfahren anzugeben und eine Druckluftbremsanlage zu schaffen, mit dem/der unter weitestgehender Verwendung bisheriger Aggregate und Leitungswege auf vergleichsweise billige und einfach zu realisierende Weise ein höheres Bremsdruckniveau an einer Achse des Fahrzeuges bereitstellbar ist.

Diese Aufgabe ist erfindungsgemäß durch das im Anspruch 1 angegebene Verfahren und die im Anspruch 3 angegebene Druckluftbremsanlage gelöst.

Vorteilhafte Ausgestaltungen bzw. Einzelheiten der Erfindung sind in den abhängigen Unteransprüchen gekennzeichnet.

Das erfindungsgemäße Verfahren basiert auf der Erkenntnis, daß für Normalbremsungen der bisherige maximale Bremsdruck aus dem Druckluftbehälter genügt. Lediglich für Vollbremsungen muß dann zur Bremskrafterhöhung zusätzlich die Druckluft aus dem Hochdruckbehälter abgerufen werden. Dies hat den Vorteil, daß trotz der Möglichkeit, eine erhöhte Bremskraft bereitstellen zu können, die Druckluftbremsanlage weitestgehend auf den bisher verwendeten Aggregaten und Leitungswegen basierend realisiert werden kann, es kommen ergänzend lediglich die im Anspruch 4 angegebenen Mittel hinzu. Außerdem müssen nur jene Teile des Bremskreises, die von der Druckluft höheren Druckes beaufschlagt werden, entsprechend neu ausgelegt werden.

Bei Anwendung der Erfindung an der Vorderachse unter Beibehaltung des bisherigen 8-bar-Druckluftbremskreises und Hinzufügung der erfindungsgemäßen Hochdruckteile - ausgelegt auf 12,5 bar - ist eine Bremskrafterhöhung um ca.36 % erzielbar. Dies entspricht einer ca.18%igen Gesamtbremskrafterhöhung bei einem zweiachsigen Nutzfahrzeug. Mehr wäre auch bei einer vollständig auf beispielsweise 10 bar ausgelegten Bremsanlage des Fahrzeuges nicht erzielbar.

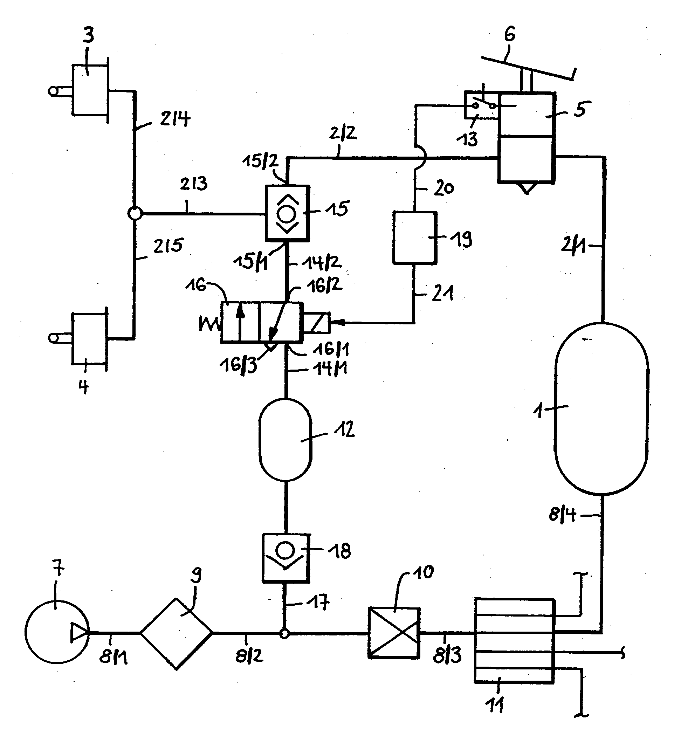

Nachstehend ist die Erfindung anhand eines in der Zeichnung dargestellten Beispieles noch näher erläutert. In der Zeichnung ist eine Druckluftbremsanlage gezeigt, die zum Bremsen der Räder einer Achse bzw. eines Achsaggregates eines Fahrzeuges insbesondere der Vorderachse eines Nutzfahrzeuges (Lkw, Omnibus und dergleichen) dient.

Basis dieser Druckluftbremsanlage ist ein Grund-Bremskreis, gebildet durch eine von einem auf beispielsweise 8 bar Speicherdruck angelegten Druckluftbehälter 1 abgehende Bremsdruckleitung mit Abschnitten 2/1, 2/2, 2/3 und Verzweigungen 2/4, 2/5, die zu den zu bremsenden Rädern zugehörigen Bremszylindern 3 (rechte Fahrzeugseite) bzw. 4 (linke Fahrzeugseite) hinführen. In den Bremsdruckleitungs-Abschnitt 2/1 ist ein Betriebsbremsventil 5 eingebaut, das vom Fahrer durch Betätigung des Betriebsbremspedals 6 aktivierbar ist und dementsprechend dosiert die Druckluft aus dem Druckbehälter 1 zu den Bremszylindern 3,4 freigibt. Der Druckluftbehälter 1 wird voneinem Kompressor 7 her über einen Leitungsweg 8/1, 8/2, 8/3, 8/4 mit eingebautem Druckregler 9, Druckverhältnisventil 10 und Mehrkreisschutzventil 11 mit Druckluft versorgt. An den weiteren, nicht näher bezeichneten Ausgängen des Mehrkreisschutzventiles 11 sind andere Druckluftkreise, z.B. der Hinterachsbremskreis, der Anhängerbremskreis, ein Nebenverbraucherkreis oder dergleichen, angeschlossen. Die Druckluftversorgungsorgane 7, 9, 10, 11 sind auf die vom Gesetzgeber vorgeschriebene Befüllungszeit und Sicherheit des Druckluftbehälters 1 ausgelegt.

Mit den vorbeschriebenen Organen ließe sich eine Bremsung mit einer dem Speicherdruck des Druckluftbehälters 1 von beispielsweise 8 bar entsprechenden Bremskraft erzielen.

Um jedoch für Vollbremsungen eine höhere Bremskraft bereitstellen zu können, ist den vorbeschriebenen Organen erfindungsgemäß eine Hochdruckbereitstellungseinrichtung zugeordnet. Diese besteht aus
- einem ebenfalls vom Kompressor 7 her befüllbaren Hochdruckbehälter 12, dessen Volumen kleiner, aber dessen Speicherdruck höher als jener des Druckluftbehälters 1 ist, und
- einem durch Volldurchtreten des Betriebsbremspedals 6 aktivierbaren Kick-down-Schalter 13, und
- einer Druckleitung mit Abschnitten 14/1, 14/2 zwischen Hochdruckbehälter 12 und dem nach Betriebsbremsventil 5 gegebenen Abschnitt 2/2 der Bremsdruckleitung,
- einem abhängig von der Betätigung des Kick-down-Schalters 13 umschaltbaren Absperr-Magnetventil 16 in der Druckleitung 14/1, 14/2, und
- einem druckabhängig zwischen den Druckleitungsabschnitten 2/2 und 14/2 umschaltenden Select-high-2-Wege-Ventil 15, wobei an dessen einem Eingang 15/1 der Druckleitungs-Abschnitt 14/2, an dessen zweitem Eingang 15/2 der Bremsdruckleitungs-Abschnitt 2/2 und an dessen Ausgang der Bremsdruckleitungs-Abschnitt 2/3 angeschlossen sind.

Der Hochdruckbehälter 12 ist dabei über eine Speiseleitung 17, die von dem Leitungs-Abschnitt 8/2 zwischen Druckregler 9 und Druckverhältnisventil 10 abzweigt und in die ein nur in Speiserichtung durchlässiges Rückschlagventil 18 eingebaut ist, mit vom Kompressor 7 geförderter Druckluft befüllbar. Das Volumen des Hochdruckbehälters 12 ist wesentlich kleiner als jenes des Druckluftbehälters 1 ausgelegt. Der Speicherdruck des Hochdruckbehälters 12 ist wesentlich höher als jener des Druckluftbehälters 1.

Das Absperr-Magnetventil 10 ist durch ein 3/2-Wegeventil gebildet, mit dessen erstem Anschluß 16/1 der Druckleitungs-Abschnitt 14/1 und mit dessen zweitem Anschluß 16/2 der Druckleitungs-Abschnitt 14/2 verbunden sind. In der einen Schaltstellung ist die Verbindung zwischen den Druckleitungs-Abschnitten 14/1, 14/2 durchgeschaltet, während in der zweiten Schaltstellung diese Verbindung unterbrochen und der zweite Anschluß 16/2 mit einem dritten Anschluß 16/3 verbunden ist, in welcher Schaltstellung eine Entlüftung der Bremszylinder 3,4 über die Leitungsteile 2/4, 2/5, 2/3 und 14/2 in die Atmosphäre erfolgt. Der Kick-down-Schalter 13 kann mit dem Betriebsbremsventil 5 vereinigt, in dieses integriert, an dieses angebaut oder im Betätigungsweg des Betriebsbremspedals 6 angeordnet sein.

Außerdem ist eine elektrische bzw. elektronische Steuerschaltung 19 vorgesehen, die eine Betätigung oder Nichtbetätigung des über Leitung 20 angeschlossenen Kick-down-Schalters 13 erfaßt und in entsprechende Betätigungs- bzw. Umschaltbefehle für Absperr-Magnetventil 16 umsetzt, die über Steuerleitung 21 übertragen werden.

Die Steuerschaltung 19 kann mit Mitteln, z.B. einem Zeitglied, für ein geringfügig zeitlich verzögertes Schalten/Umschalten des Absperr-Magnetventiles 16 nach Betätigung des Kick-down-Schalters 13 ausgestattet sein.

Aufgrund dieser so ausgebildeten Druckluftbremsanlage läßt sich folgendes Verfahren beim Bremsen realisieren, nämlich
a) bei einer normalen Bremsung werden die Bremszylinder 3,4 nur mit Druckluft aus dem Druckluftbehälter 1 über Leitungswege 2/1, 2/2, 2/3, 2/4, 2/5 beaufschlagt,
b) bei einer Vollbremsung dagegen werden die Bremszylinder 3,4 zunächst mit Druckluft aus dem Druckluftbehälter 1 und dann -zur Bremskrafterhöhung - zusätzlich mit Druckluft höheren Druckes aus dem Hochdruckbehälter 12 über durchgeschaltete Leitungswege 14/1, 14/2, 2/3, 2/4, 2/5 beaufschlagt.

Bei einer normalen Bremsung wird das Betriebsbremspedal 6 nur teilweise bzw. bis zu einem fühlbaren Endpukt durchgetreten. Für eine Vollbremsung ist dieser fühlbare Endpunkt zu überwinden, was dann eine Betätigung des Kick-down-Schalters 13 und eine Auslösung der Hochdruckbeaufschlagung zur Folge hat. Dies bedeutet, daß bis zur Betätigung des Kick-down-Schalters 13 auch im Fall einer Vollbremsung zunächst nur die Druckluft niedrigeren Druckes aus dem Druckluftbehälter 1 wirksam ist, der Fahrer aber mit dem Betriebsbremspedal 6 die Möglichkeit hat, den Fall der Hochdruckbremsung schnell oder langsamer herbeizuführen. Um einem zu raschen Beaufschlagen der Bremszylinder 3, 4 mit Hochdruck - noch bevor sich der Druck des Grund-Bremskreises aufgebaut hat - vorzubeugen, können die Maßnahmen zur Bremskrafterhöhung zeitlich geringfügig verzögert nach Betätigung des Kick-down-Schalters 13 eingeleitet weden, wozu die entsprechenden Mittel in der Steuereinrichtung 19 gegebenenfalls zu aktivieren wären.

## Patentansprüche

1. Verfahren zum Bremsen der Räder einer Achse bzw. eines Achsaggregates eines Fahrzeuges, insbesondere der Vorderachse eines Nutzfahrzeuges, dadurch gekennzeichnet, daß die Bremszylinder (3,4)
a) bei einer Vollbremsung zunächst mit Druckluft bestimmten Druckes aus einem Druckluftbehälter (1) und dann zur Bremskrafterhöhung zusätzlich mit Druckluft höheren Druckes aus einem Hochdruckbehälter (12), dagegen
b) bei einer normalen Bremsung nur mit Druckluft aus dem Druckluftbehälter (1)
beaufschlagt werden.

2. Verfahren nach Anspruch 1, dadurch gekennzeichnet, daß die Maßnahmen zur Bremskrafterhöhung bei Vollbremsung zeitlich geringfügig verzögert eingeleitet werden.

3. Druckluftbremsanlage zur Durchführung des Verfahrens nach Anspruch 1, mit einem von einem Kompressor (7) über Druckregel- und -steuerorgane (9, 10, 11) mit Druckluft versorgbaren Druckluftbehälter (1), aus dem Druckluft über eine Bremsdruckleitung (2/1, 2/2, 2/3, 2/4, 2/5) durch entsprechende Betätigung des Betriebsbremsventiles (5) dosiert den Bremszylindern (3, 4) zuführbar ist, gekennzeichnet durch das zusätzliche Vorsehen einer Hochdruckbereiteinstellungseinrichtung mit Mitteln zur gesteuerten Abgabe von Druckluft höheren Druckes als aus dem Druckluftbehälter (1) im Fall einer Vollbremsung.

4. Druckluftbremsanlage nach Anspruch 3, dadurch gekennzeichnet, daß die Hochdruckbereitstellungseinrichtung aus folgenden Organen besteht, nämlich
a) einem ebenfalls vom Kompressor (7) her befüllbaren Hochdruckbehälter (12), dessen Volumen kleiner, aber dessen Speicherdruck höher als jener des Druckluftbehälters (1) ist, und
b) einem durch Volldurchtreten des Betriebsbremspedals (6) aktivierbaren Kick-down-Schalter (13), und
c) einer Druckleitung (14/1, 14/2) zwischen Hochdruckbehälter (12) und dem nach Betriebsbremsventil (5) gegebenen Bremsdruckleitungs-Abschnitt (2/2), und
d) einem abhängig von der Betätigung des Kick-down-Schalters (13) umschaltbaren Absperrmagnetventil (16) in der Druckleitung (14/1, 14/2), und
e) einem druckabhängig zwischen den Druckleitungs-Abschnitten (2/2) und (14/2) umschaltenden sowie mit dem Druckleitungs-Abschnitt (2/3) verbundenen Select-high-2-Wege-Ventil (15),
mit welchen Bauteilen bei einer Volbremsung nach einer Beaufschlagung der Bremszylinder (3, 4) mit Druckluft aus dem Druckluftbehälter (1) zur Bremskrafterhöhung durch Betätigung des Kick-down-Schalters (13) Druckluft aus dem Hochdruckbehälter (12) zu den Bremszylindern (3,4) freigebbar ist.

5. Druckluftbremsanlage nach Anspruch 4, dadurch gekennzeichnet, daß vom Kompressor (7) die Druckluft über Leitungswege (8/1, 8/2, 8/3, 8/4) mit - nacheinander eingebaut - einem Druckregler (9), ein Druckverhältnisventil (10) und ein Mehrkreisschutzventil (11) dem Druckluftbehälter (1) und außerdem über eine Speiseleitung (17), die von dem Leitungsteil (8/2) zwischen Druckregler (9) und Druckverhältnisventil (10) abzweigt und in die ein nur in Speiserichtung durchlässiges Rückschlagventil (18) eingebaut ist, dem Hochdruckbehälter (12) zuführbar ist.

6. Druckluftbremsanlage nach Anspruch 4, dadurch gekennzeichnet, daß das Absperrmagnetventil (16) durch ein 3/2-Wege-Ventil gebildet ist, mit dessen erstem Anschluß (16/1) der Druckleitungs-Abschnitt (14/1) und mit deren zweiten Anschluß (16/2) der Druckleitungs-Abschnitt (14/2) verbunden sind, wobei in dessen einer Schaltstellung die Verbindung zwischen den Druckleitungs-Abschnitten (14/1, 14/2) durchgeschaltet, in dessen zweiter Schaltstellung dagegen diese Verbindung unterbrochen und der zweite Anschluß (16/2) mit einem dritten Anschluß (16/3) verbunden ist, in welcher Schaltstellung eine Entlüftung der Bremszylinder (3,4) über Leitungswege (2/4, 2/5, 2/3 und 14/2) in die Atmosphäre erfolgt.

7. Druckluftbremsanlage nach Anspruch 4, dadurch gekennzeichnet, daß der Kick-down-Schalter (13) mit dem Betriebsbremsventil (5) vereinigt, in dieses integriert oder an dieses angebaut ist.

8. Druckluftbremsanlage nach Anspruch 4, dadurch gekennzeichnet, daß der Kick-down-Schalter (13) in Abhängigkeit von der Bewegung des Betriebsbremspedals (6), im entsprechenden Betätigungsweg angeordnet, betätigbar ist.

9. Druckluftbremsanlage nach Anspruch 4, dadurch gekennzeichnet, daß das Volumen des Hochdruckbehälters (12) wesentlich kleiner als jenes des Druckluftbehälters (1) ausgelegt ist, und daß der Speicherdruck des Hochdruckbehälters (12) wesentlich höher als jener des Druckluftbehälters (1) ist.

10. Druckluftbremsanlage nach Anspruch 4, dadurch gekennzeichnet, daß eine elektrische bzw. elektronische Steuerschaltung (19) vorgesehen ist, die eine Betätigung oder Nichtbetätigung des angeschlossenen Kick-down-Schalters (13) erfaßt und in eine entsprechende Betätigung bzw. Umschaltung des Absperr-Magnetventiles (16) umsetzt.

11. Druckluftbremsanlage nach Anspruch 10, dadurch gekennzeichnet, daß die Steuerschaltung (19) mit Mitteln, z.B. einem Zeitglied, für ein geringfügig zeitlich verzögertes Schalten/Umschalten des Absperr-Magnetventiles (16) nach Betätigung des Kick-down-Schalters (13) ausgestattet ist.

## Claims

1. A method for decelerating the wheels of an axle or axle unit of a vehicle, more particularly the front axle of a commercial vehicle, characterised in that the brake cylinders (3, 4)
a) during full braking are firstly acted upon by compressed air with a predetermined pressure from a compressed air container (1) and then in order to increase the brake power are additionally acted upon by compressed air with increased pressure from a high pressure container (12), whereas
b) during normal braking the brake cylinders (3, 4) are merely acted upon by compressed air from the compressed air container (1).

2. A method according to claim 1, characterised in that the measures for increasing the brake power during full braking are introduced with a slight time delay.

3. A compressed air brake system for carrying out the method according to claim 1, with a compressed air container (1), which can be supplied with compressed air from a compressor (7) via pressure control and monitoring elements (9, 10, 11) and from which compressed air can be supplied to the brake cylinders (3, 4) in metered fashion via a brake pressure line (2/1, 2/2, 2/3, 2/4, 2/5), characterised by the additional provision of a high pressure preparation device with means for the controlled release of compressed air with a higher pressure than that coming from the compressed air container (1) in the event of full braking.

4. A compressed air brake system according to claim 3, characterised in that the high pressure preparation device comprises the following elements, namely
a) a high pressure container (12), which can be similarly supplied by the compressor (7) and whose volume is smaller than that of the compressed air container (1), whilst its storage pressure is higher, and
b) A kick-down switch (13) actuatable by full actuation of the brake pedal (6), and
c) a pressure line (14/1, 14/2) between the high pressure container (12) and the brake pressure line section (2/2) downstream of the brake valve (5), and
d) a reversible magnetic cut-off valve (16) in the pressure line (14/1, 14/2), which valve can be switched as a function of the actuation of the kick-down switch (13), and
e) a select-high 2-way valve (15), which switches as a function of the pressure between the pressure line sections (2/2) and (14/2) and is connected to the pressure line section (2/3),
by means of which components compressed air is released from the high pressure container (12) to the brake cylinders (3, 4) during full braking by the actuation of the kick-down switch (13) in order to increase brake power after an actuation of the brake cylinders (3, 4) with compressed air from the compressed air container (1).

5. A compressed air brake system according to claim 4, characterised in that the compressed air can be supplied to the compressed air container (1) from the compressor (7) via line paths (8/1, 8/2, 8/3, 8/4) with - connected in series - a pressure control element (9), a pressure ratio valve (10) and a multi-circuit protection valve (11) and can also be supplied to the high pressure container (12) via a supply line (17), which branches off from the line section (8/2) between the pressure control element (9) and the pressure ratio valve (10) and in which a non-return valve (18) is fitted, which only allows flow in the supply direction.

6. A compressed air brake system according to claim 4, characterised in that the magnetic cut-off valve (16) is formed by a 3/2-way valve, with whose first terminal (16/1) the pressure line section (14/1) is connected and with whose second terminal (16/2) the pressure line section (14/2) is connected, the connection between the pressure line sections (14/1, 14/2) being formed in the first switching position of the magnetic cut-off valve (16) and being interrupted in its second switching position, the second terminal (16/2) being connected with a third terminal (16/3) in this switching position, thereby effecting an evacuation of the brake cylidners (3, 4) via line paths (2/4, 2/5, 2/3 and 14/2) into the atmosphere.

7. A compressed air brake system according to claim 4, characterised in that the kick-down switch (13) is combined with, integrally formed with or fitted on the brake valve (5).

8. A compressed air brake system according to claim 4, characterised in that the kick-down switch (13) can be actuated as a function of the movement of the brake pedal (6), and is arranged in the corresponding actuation path.

9. A compressed air brake system according to claim 4, characterised in that the volume of the high pressure container (12) is substantially smaller than that of the compressed air container (1) and the storage pressure of the high pressure container (12) is substantially higher than that of the compressed air container (1).

10. A compressed air brake system according to claim 4, characterised in that an electrical or electronic control circuit (19) is provided, which detects an actuation or non-actuation of the connected kick-down switch (13) and converts same into a corresponding actuation or switching of the magnetic cut-off valve (16).

11. A compressed air brake system according to claim 10, characterised in that the control circuit (19) is provided with means, e.g. a timer, for the slightly time-delayed switching of the magnetic cut-off valve (16) after the actuation of the kick-down switch (13).

## Revendications

1. Procédé de freinage des roues d'un essieu ou d'un groupe d'essieux d'un véhicule, notamment de l'essieu avant d'un véhicule utilitaire, procédé caractérisé en ce que les cylindres de frein (3, 4) sont alimentés de la manière suivante :
a) pour un freinage total, tout d'abord avec l'air comprimé à une pression déterminée à partir d'un réservoir d'air comprimé (1), puis pour augmenter la force de freinage avec en plus de l'air comprimé à une pression plus élevée provenant d'un réservoir haute pression (12),
b) pour un freinage normal, seulement avec l'air comprimé du réservoir d'air comprimé (1).

2. Procédé selon la revendication 1, caractérisé en ce que les moyens pour augmenter la force de freinage pour le freinage total sont mis en oeuvre avec une légère temporisation.

3. Installation de freinage à air comprimé pour la mise en oeuvre du procédé selon la revendication 1, comprenant un réservoir d'air comprimé (1) alimenté en air comprimé à partir d'un compresseur (7) par l'intermédiaire d'organes de régulation et de commande de pression (9, 10, 11), et qui fournit aux cylindres de freins (3, 4) de l'air comprimé, dosé, par une conduite de pression de frein (2/1, 2/2, 2/3, 2/4, 2/5) par actionnement correspondant de la soupape de frein de marche (5), installation caractérisée en ce qu'elle comporte en outre une installation fournissant la haute pression avec des moyens pour fournir de façon commandée de l'air comprimé à une pression plus élevée du réservoir d'air comprimé (1) pour le cas d'un freinage total.

4. Installation de freinage d'air comprimé selon la revendication 3, caractérisée en ce que l'installation fournissant la haute pression se compose des organes suivants :
a) un réservoir haute pression (12) également alimenté par le compresseur (7), dont le volume est plus petit mais dont la pression de stockage est plus élevée que celle du réservoir d'air comprimé (1),
b) un commutateur "kick-down" (13) mis en oeuvre par l'enfoncement complet de la pédale de frein de marche (6),
c) une conduite de pression (14/1, 14/2) entre le réservoir haute pression (12) et le segment de conduite de pression de frein (2/2) en aval de la soupape de frein de marche (5),
d) une électrovanne d'arrêt (16) commutable indépendamment de l'actionnement du commutateur "kick-down" (13) dans la conduite de pression (14/1, 14/2),
e) une soupape à deux voies de sélection de niveau haut, indépendante de la pression, commutable entre les sections de conduite de pression (2/2) et (14/2) et en étant reliée aux segments de conduite de pression (2/3), ces composants permettant, lors d'un freinage total après une sollicitation des cylindres de frein (3, 4) avec de l'air comprimé du réservoir d'air comprimé 1, d'augmenter la force de freinage par actionnement du commutateur "kick-down" (13) en fournissant de l'air comprimé du réservoir haute pression (12) aux cylindres de frein (3, 4).

5. Installation de freinage à air comprimé selon la revendication 4, caractérisée en ce que le compresseur (7) fournit l'air comprimé par les conduites (8/1, 8/2, 8/3, 8/4) par l'intermédiaire du circuit formé d'un régulateur de pression (9), d'une soupape de rapport de pressions (10) et d'une soupape de protection de plusieurs circuits (11) à un réservoir d'air comprimé (1) et de plus par une conduite d'alimentation (17) qui dérive de la partie de conduite (8/2) entre le régulateur de pression (9) et la soupape de rapport de pression (10), conduite dans laquelle est montée une soupape d'arrêt (18) qui n'est ouverte que dans le sens de l'alimentation, pour alimenter le réservoir haute pression (12).

6. Installation de freinage d'air comprimé selon la revendication 4, caractérisée en ce que l'électrovanne d'arrêt (16) est constituée par un distributeur à 3/2 voies dont le premier raccord (16/1) est relié au segment de conduite de pression (14/1) et dont le second raccord (16/2) est relié au segment de conduite de pression (14/2), et qui dans une position de commutation ouvre la liaison entre les segments de conduites de pression (14/1, 14/2) et qui dans la seconde position de commutation coupe la liaison et relie le second raccord (16/2) à un troisième raccord (16/3), position de commutation pour laquelle il y a évacuation à l'atmosphère des cylindres de frein (3, 4) par des conduites (2/4, 2/5, 2/3 et 14/2).

7. Installation de freinage à air comprimé selon la revendication 4, caractérisée en ce que le commutateur "kick-down" (13) est combiné à la soupape de frein de marche (5) en étant intégré à celle-ci ou monté sur celle-ci.

8. Installation de freinage à air comprimé selon la revendication 4, caractérisée en ce que le commutateur "kick-down" (13) est actionné en fonction du mouvement de la pédale de frein de route (16) en étant monté dans le chemin de commande correspondant.

9. Installation de freinage à air comprimé selon la revendication 4, caractérisée en ce que le volume du réservoir haute pression (12) est beaucoup plus petit que celui du réservoir d'air comprimé (1) et la pression de stockage dans le réservoir haute pression (12) est beaucoup plus élevée que celle dans le réservoir d'air comprimé (1).

10. Installation de freinage à air comprimé selon la revendication 4, caractérisée par un circuit de commande électrique ou électronique (19) qui détecte l'actionnement ou le non actionnement du commutateur "kick-down" (13) et transforme cette détection en une commande correspondante ou commutation de l'électrovanne d'arrêt (16).

11. Installation de freinage à air comprimé selon la revendication 10, caractérisée en ce que le circuit de commande (19) comporte des moyens par exemple un organe de temporisation pour retarder légèrement la commutation/inversion de l'électrovanne d'arrêt (16) après actionnement du commutateur kick-down (13).
